# EUROPEAN PATENT SPECIFICATION

(11) **EP 1 785 027 B1**
(45) Date of publication and mention of the grant of the patent: **12.08.2009**
(21) Application number: 06123565.1
(22) Date of filing: 07.11.2006
(51) Int. Cl.: A01D 43/063

(54) **Lawn mower**
Rasenmäher
Tondeuse à gazon

(30) Priority: 09.11.2005 US 270409
(43) Date of publication of application: 16.05.2007
(73) Proprietor: Husqvarna AB, 561 82 Huskvarna (SE)
(72) Inventor: Barlow, Dale, Dublin, GA 31021 (US); Scott, Michael, Dublin, GA 31021 (US); Hall, Randy, Dublin, GA 31021 (US)

(56) References cited:
- FR-A- 2 814 330
- GB-A- 2 066 033
- US-A- 3 872 656
- US-A- 4 238 918
- US-A- 4 312 176
- US-A- 4 843 805

## Description

### BACKGROUND OF THE INVENTION

### FIELD OF THE INVENTION

The present invention relates generally to lawn mowers, and more particularly, to walk behind lawn mowers and devices therefore.

### DESCRIPTION OF PRIOR ART

Walk behind lawn mowers are available in different sizes with different cutting widths and models. A lawn mower comprises at least one rotating cutting blade for cutting grass or other vegetation. The cutting blade is surrounded by a mower deck housing in order to increase safety for the operator and to prevent undesirable spreading of the cut grass. A combustion engine or an electric motor can power the cutting blades. The cut grass is led from the cutting area via an exit opening in the mower deck housing via a channel to a grass receptacle often placed on the aft of the mower. The grass receptacle is removed from the lawn mower when the bag is filled with cut grass and emptied by the operator before it is returned to the position on the aft of the mower. GB 2066033 discloses a prior art lawn mower having a grass collector and an opening in the mower housing for discharging grass clippings into the grass collector. The opening is provided with a door hinged for rotatation forwardly/downwardly to open the door.

### BRIEF SUMMARY OF THE INVENTION

The following presents a simplified summary of the invention in order to provide a basic understanding of some aspects of the invention. This summary is not an extensive overview of the invention. It is intended to neither identify key or critical elements of the invention nor delineate the scope of the invention. Its sole purpose is to present some concepts of the invention in a simplified form as a prelude to the more detailed description that is presented later.

In accordance with an aspect of the present invention a discharge device in a lawn mower is provided. The device includes a cutting device placed underneath a housing that surround the sides and top of the cutting device, a grass outlet in the housing is leading cut grass via a discharge chute to a bag where the grass is collected, the end of the discharge chute is provided with a door that closes the discharge chute when the bag is removed from the lawn mower, wherein the door is rotatable around an axis substantially parallel to the axial direction of the discharge chute and automatically rotated to not cover the end of the discharge chute when the bag is secured to the lawn mower.

In accordance with another aspect of the present invention, a lawn mower is provided. The lawn mower includes a housing; a discharge chute coupled to the housing; a door adapted to selectively cover an opening of the discharge chute; and a pivot member coupled to the door such that the door is rotatable about an axis that extends in a substantially horizontal direction, wherein the pivot member is an axle that extends in a direction that is substantially parallel to an axial direction of the discharge chute at the opening of the discharge chute.

In accordance with yet another aspect of the present invention, a lawn mower is provided. The lawn mower includes a housing having a discharge means for cut grass coupled thereto; a door adapted to selectively cover an opening of the discharge means; and means for pivoting the door in a side-to-side manner between a position where the opening of the discharge means is covered and a position where the opening of the discharge means is uncovered; wherein the door is not visible when a grass receptacle is coupled to the lawn mower.

The following description and the annexed drawings set forth in detail certain illustrative aspects of the invention. These aspects are indicative, however, of but a few of the various ways in which the principles of the invention may be employed and the present invention is intended to include all such aspects and their equivalents. Other objects, advantages and novel features of the invention will become apparent from the following detailed description of the invention when considered in conjunction with the drawings.

### BRIEF DESCRIPTION OF THE DRAWINGS

The foregoing and other features and advantages of the present invention will become apparent to those skilled in the art to which the present invention relates upon reading the following description with reference to the accompanying drawings.
Figure 1 illustrates a perspective view of a walk behind lawn mower in accordance with an aspect of the present invention.
Figure 2 illustrates a discharge door of a lawn mower in a closed position in accordance with an aspect of the present invention.
Figure 3 illustrates a discharge door of a lawn mower in an open position in accordance with an aspect of the present invention.
Figure 4 illustrates a perspective view of a discharge device of a lawn mower coupled to a supporting frame of a grass receptacle in accordance with an aspect of the present invention.
Figure 5 illustrates a perspective view of a grass receptacle for a lawn mower in accordance with an aspect of the present invention.
Figure 6 is an enlarged view of the areas encircled and labeled 6 within Figure 5, and illustrates a material flap of a grass receptacle for a lawn mower in accordance with an aspect of the present invention.
Figure 7 illustrates a perspective view of a handle for a lawn mower in accordance with an aspect of the present invention.
Figure 8 illustrates a perspective view of a lever of a handle for a lawn mower in accordance with an aspect of the present invention.

### DETAILED DESCRIPTION OF AN EXAMPLE EMBODIMENT

The present invention relates to a walk behind lawn mower and devices therefore. The present invention will now be described with reference to the drawings, wherein like reference numerals are used to refer to like elements throughout. It is to be appreciated that the various drawings are not necessarily drawn to scale from one figure to another nor inside a given figure, and in particular that the size of the components are arbitrarily drawn for facilitating the understanding of the drawings. In the following description, for purposes of explanation, numerous specific details are set forth in order to provide a thorough understanding of the present invention. It may be evident, however, that the present invention can be practiced without these specific details.

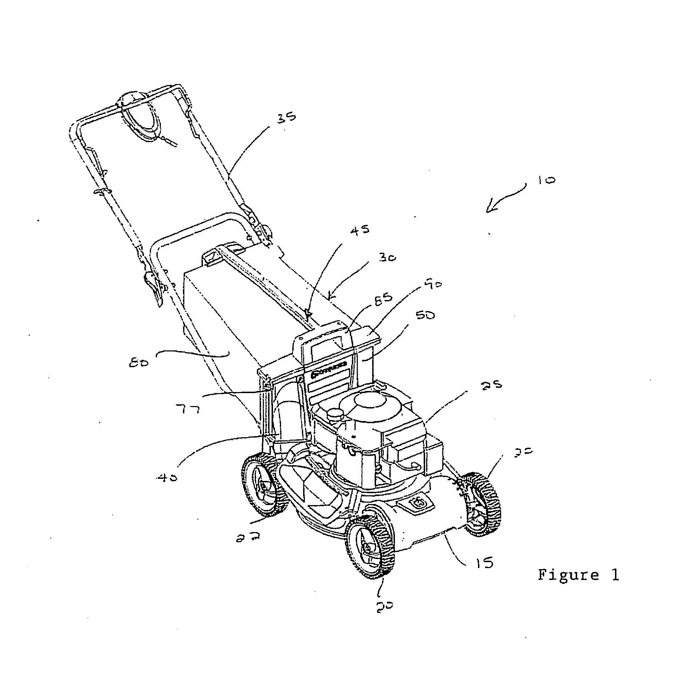

Referring initially to Figure 1, a lawn mower 10 is depicted in accordance with an aspect of the present invention. As shown, the lawn mower 10 can be a walk-behind self-propelled working machine. However, it is to be appreciated that the invention may be used within various other types of machines. The lawn mower 10 comprises a housing 15 with left and right front wheels 20 provided at a front portion of the housing 15 and left and right rear wheels 22 provided at a rear portion of the housing 15. The lawn mower 10 also includes an engine 25 provided at a top portion of the housing for powering the lawn mower 10, a grass receptacle 30 and an operating handle 35 extending rearward from the housing 15. A lower portion of the housing 15 opens downward and is adapted to surround the sides and top of a cutting blade (not shown) that is rotated by the engine 25 via an output shaft (not shown). The housing 15 includes a discharge chute 40 that can be materially integral to the housing 15 or a separate component coupled thereto. The discharge chute 40 is adapted to lead cut grass to the grass receptacle 30 placed on an aft portion of the lawn mower 10. The grass receptacle 30 is coupled to the lawn mower 10 via a supporting frame 45. The supporting frame 45 is attached to a docking device 50 on the lawn mower 10.

Accordingly, grass cut by the cutting blade is received in the grass receptacle 30 through the discharge chute 40.

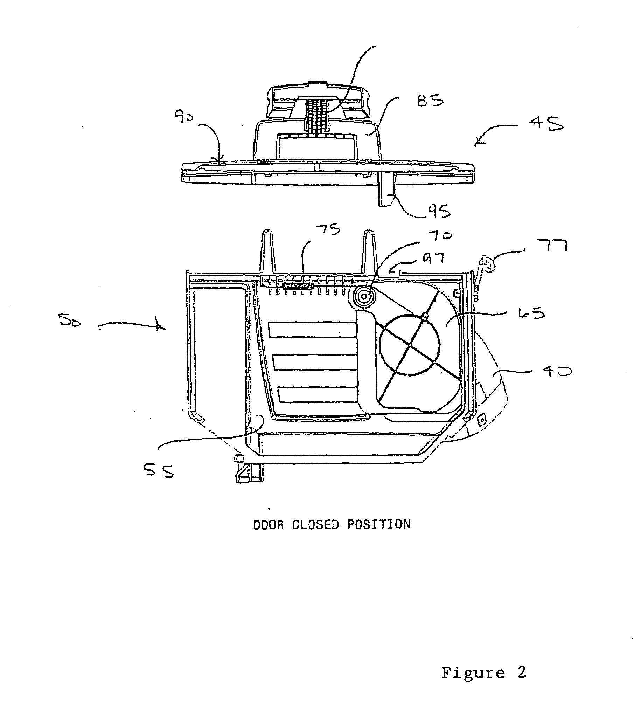

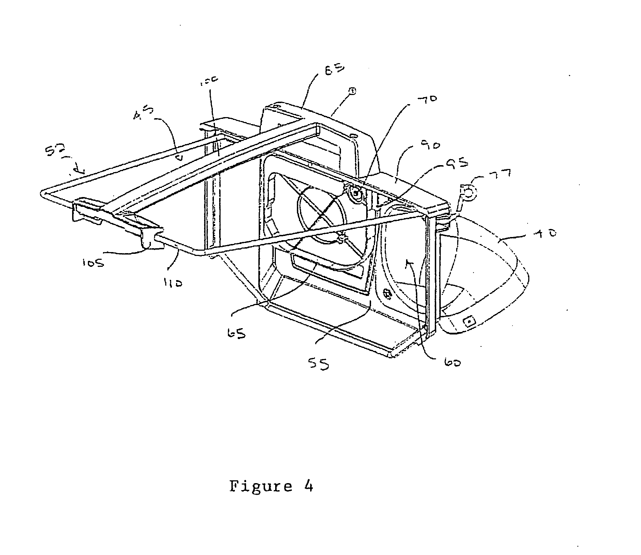

Turning now to Figures 2-4, the docking device 50 and the engagement of the docking device 50 to the supporting frame 45 is illustrated in greater detail in accordance with an aspect of the present invention. A material cover 80 of the grass receptacle 30 is removed from the illustrations of Figures 2-4 in order to more clearly see the components of the docking device 50 and the supporting frame 45. However, during use, the material cover 80 is provided over a receptacle frame 52. Such an arrangement is shown in Figure 4. The docking device 50 is shaped with a substantially flat section 55 that corresponds with a front side of the grass receptacle 30. The discharge chute 40 for the cut grass terminates in an opening 60 in the flat section 55 of the docking device 50. A door 65 that is pivotable or rotatable in a side-to-side manner can selectively cover the opening 60. The door 65 is coupled to and adapted to pivot or rotate about a substantially horizontal axis. More specifically, the door 65 rotates about an axle 70 that is substantially parallel to the longitudinal direction of the discharge chute end portion that forms the opening 60 in the flat section 55. The axle 70 extends substantially transverse from the flat section 55. A spring 75 is coupled between the docking device 50 and the door 65 to bias the door 65 into a closed position. The closed position of the door 65 is shown in Figure 2.

Thus, the door 65 is closed automatically when the grass receptacle 30 is released from docking device 50.

During a bagging operation of the lawn mower 10, the grass receptacle 30 is coupled to the supporting frame 45. The cut grass is collected in the grass receptacle 30 from the discharge chute 40. When the grass receptacle 30 is full, the bag 30 can be easily released from the docking device 50 and emptied. The bag 30 is released by pulling on a portion of the supporting frame 45 and unlatching a quick release fastener 77 coupled to the docking device 50. It is to be appreciated that any suitable fastener can be provided on any suitable structure to couple the supporting frame 45 or the receptacle frame 52 to the docking device 50. Likewise, the grass receptacle 30 can be easily snapped into engagement with the docking device 50 via the fastener 77 and the engagement of the corresponding components between the grass receptacle 30 and the docking device 50. The front end of the supporting frame 45 is provided with a handle 85 on the topside of a bar 90 that extends across a top front end portion of the grass receptacle 30. The supporting frame 45 also includes a support member 100 that extends along a longitudinal direction of the grass receptacle 30 and a connector bar 105 that is adapted to engage a rod 110, which is part of the receptacle frame 52 of the grass receptacle 30. This coupling can be seen more clearly in Figure 4. The connector bar 105 and rod 110 coupling facilitate easy removal of the grass receptacle 30 from the supporting frame 45 in the event that the cover 80 of the bag 30 needs replaced or the like.

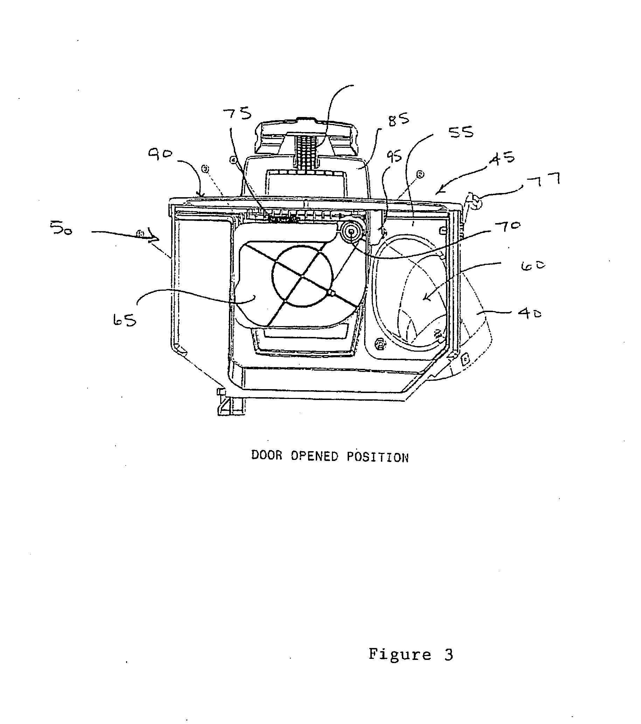

The bar 90 of the supporting frame 45 includes a downwardly extending projection 95 that is adapted to extend through a recess or groove 97 provided through a top portion of the docking device 50. Prior to engagement of the grass receptacle 30 with the docking device 50, the door 65 is biased by the spring 75 into a closed position, as illustrated in Figure 2. In this position, the grass cut by the cutting blade is not able to pass through the opening 60 of the docking device 50. Accordingly, the lawn mower 10 operates in a mulching mode, provided that the cutting blade is adapted for mulching. To change the operation of the lawn mower 10 from the mulching mode, or a non-bagging mode, to the bagging mode, the grass receptacle 30 is secured to the docking device 50 by sliding the grass receptacle 30 and the supporting frame 45 from a position above the docking device 50, as shown in Figure 2, downward in a direction substantially parallel to the flat section 55 and toward the top portion of the docking device 50. The downwardly extending projection 95 enters the recess or groove 97 of the docking device 50 until the bar 90 of the supporting frame 45 contacts the top portion of the docking device 50, as illustrated in Figure 3. The configuration of the downwardly extending projection 95 and the corresponding recess 97, including the length of the projection 95 and the position of the recess 97 is selected so that the projection 95 can engage a side of the door 65 such that the door 65 is forced to pivot or rotate in a side-to-side manner about the axle 70 and finally to a position where the opening 60 is substantially uncovered, thereby allowing cut grass to pass therethrough. The pivoting or rotating of the door 65 increases tension on the spring 75 such that when the downwardly extending projection 95 is lifted out of engagement with the door 65, the door 65 pivots or rotates back to the closed position.

The door 65, as shown in Figures 1-4 is not visible when the collection bag 30 is coupled to the lawn mower 10.

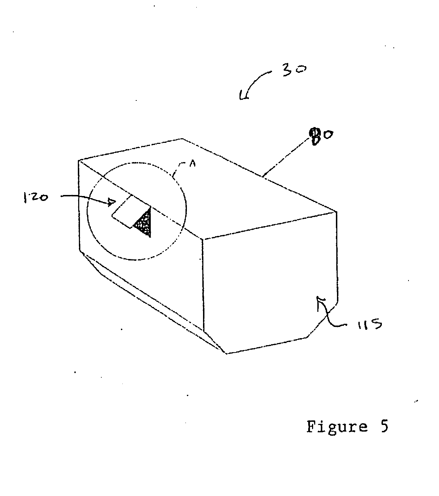

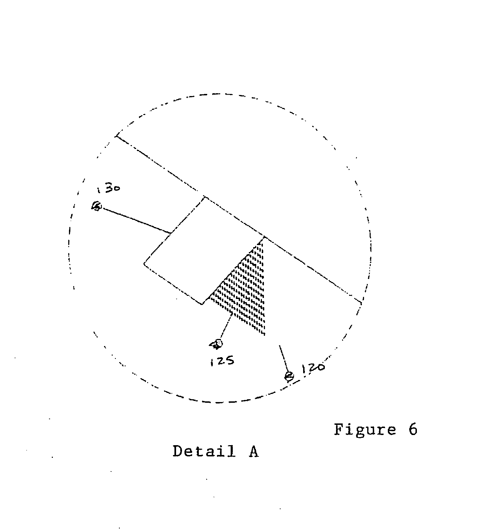

Turning now to Figures 5 and 6, the grass receptacle 30 of the lawn mower 10 is illustrated in further detail. As discussed above, the grass receptacle 30 comprises a receptacle frame 52 substantially covered by a material 80. The material 80 is preferably flexible and can be made from any conventional material used for lawn mower bags. The material is preferable porous to permit air flow. The grass receptacle 30 includes an open end portion 115 for receiving cut grass from the discharge chute 40. The grass receptacle 30 also includes an airflow indicator 120. As illustrated in greater detail in Figure 6, the airflow indicator 120 comprises a vented portion 125 provided through the material 80 of the grass receptacle 30. The vented portion 125 includes one or more apertures of a size large enough for air to pass through and small enough such that grass and other debris within the receptacle cannot pass through. The vented portion 125 can comprise an array of apertures provided through the material 80. Alternatively, the grass receptacle 30 can include a meshed insert of any suitable material as the vented portion 125. A material flap 130 is adapted to substantially cover the vented portion 125 when no air is passing through the vented portion 125. When air is passing through the vented portion 125, the material flap 130 is opened, as illustrated in Figures 5 and 6. Thus, airflow indicator 120 operates to visually indicate to a user when the grass receptacle 30 is full. When the grass receptacle 30 is not full, air is able to circulate within the grass receptacle 30 and out of the vented portion 125, thereby opening the material flap 130. On the other hand, when the grass receptacle 30 is full, air is not able to pass through the vented portion 125, and thus the material flap 130 is in a relaxed state and lies substantially flat against the receptacle 30.

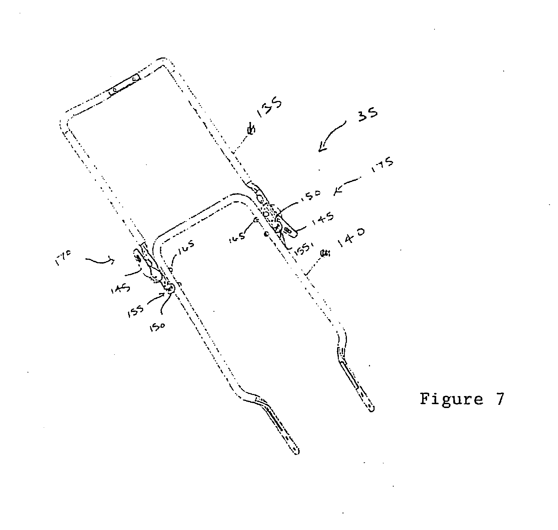

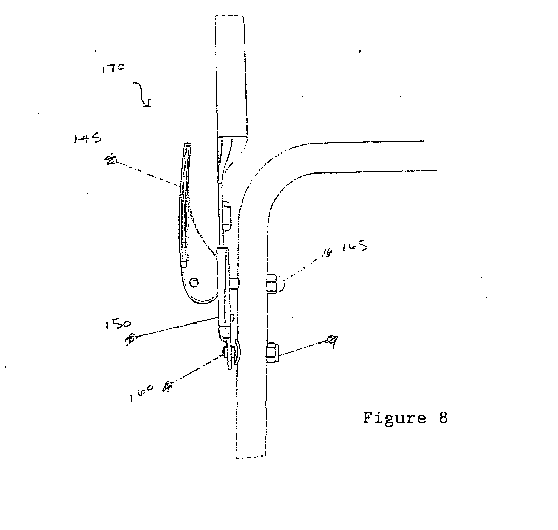

Turning now to Figures 7 and 8, the handle 35 of the lawn mower is depicted in greater detail in accordance with an aspect of the present invention. The handle 35 includes an upper member 135 and a lower member 140, wherein the upper member 135 is pivotally adjustable with respect to the lower member 140, which in turn, adjusts an overall height of the handle 35 when coupled to the lawn mower body. The upper and lower members 135, 140 are adjusted via a pair of quick adjust lever 145 and bracket 150 assemblies. Each of the brackets 150 includes two or more, preferably three, apertures 155 provided therethrough. The apertures 155 are adapted to receive a corresponding pin 160 extending through each of the legs of the lower member 140. The angle of the upper member 135 with respect to the lower member 140 is dependent upon which of the apertures 155 of the bracket 150 through which the pin 160 extends.

End portions of legs of the upper member 135 are adapted to couple to a mating portion of the corresponding brackets 150. The leg end portions of the upper member 135 and the corresponding brackets 150 are coupled between corresponding sides of the lower member 140 and corresponding quick adjust levers 145 via a pair of fasteners 165. The engagement between the quick adjust lever 145 and the corresponding fastener 165 is such that when the quick adjust lever 145 is in a first position 170, the upper member 135 and lower member 140 are biased together and the pin 160 is received through and engaged with a selected aperture 155. When the quick adjust lever 145 is in a second position 175, the lever 145 acts to bias the end portion of the upper member 135 away from the lower member 140 thereby disengaging the pin 160 from the previously selected aperture 155. In this position, the upper member 135 can be pivoted to a new position and the pin 160 can be aligned with a different selected aperture 155 to correspond with the new position. The quick adjust lever 145 is then moved back to the first position 170 to engage the pin 160 with the different selected aperture 155.

Although the present invention has been described with respect to a walk-behind mower, it is to be appreciated that similar configurations described herein can be adapted to be used with a riding mower, a towed mower, a stand-upon mower, or the like.

What has been described above includes some exemplary implementations of the present invention. It is, of course, not possible to describe every conceivable combination of components or methodologies for purposes of describing the present invention, but one of ordinary skill in the art will recognize that many further combinations and permutations of the present invention are possible. Accordingly, the present invention is intended to embrace all such alterations, modifications and variations that fall within the scope of the appended claims.

## Claims

1. Discharge device in a lawn mower (10) comprising a cutting device placed underneath a housing (15) that surrounds the sides and top of the cutting device, a grass outlet in the housing (15) is leading cut grass via a discharge chute (40) to a bag (30) where the grass is collected, the end (60) of the discharge chute (40) is provided with a door (65) that closes the discharge chute (40) when the bag (30) is removed from the lawn mower (10), **characterised in that** the door (65) is rotatable around an axis substantially parallel to the axial direction of the discharge chute (40) and automatically rotated to not cover the end (60) of the discharge chute (40) when the bag (30) is secured to the lawn mower (10).

2. Discharge device according to claim 1, wherein the front end of a bag supporting frame (45) is secured to a docking device (50) on the lawn mower (10).

3. Discharge device according to claim 2, wherein the door (65) is rotated by entering a projection (95) on the bag supporting frame (45) in a recess (97) in the docking device (50) on the lawn mower (10).

4. Discharge device according to claim 3, wherein the projection (95) is configured to contact and press on the door (65) so that the door (65) is rotated away from the end (60) of the discharge chute (40).

5. Discharge device according to claim 1, wherein a spring (75) biases the door (65) to cover the end (60) of the discharge chute (40) when the bag (30) is removed from the lawn mower (10).

6. A lawn mower (10) comprising:
a housing (15);
a discharge chute (40) coupled to the housing (15);
a door (65) adapted to selectively cover an opening (60) of the discharge chute (40); and
a pivot member (70) coupled to the door (65) such that the door (65) is rotatable about an axis that extends in a substantially horizontal direction, **characterised in that** the pivot member (70) is an axle that extends in a direction that is substantially parallel to an axial direction of the discharge chute (40) at the opening (60) of the discharge chute (40).

7. The lawn mower of claim 6, further comprising a docking device (50) coupled to the discharge chute (40), wherein the pivot member (70) extends transverse to a wall (55) of the docking device (50) which has the opening (60) of the discharge chute (40) extending therethrough.

8. The lawn mower of claim 6, further comprising a spring member (75) configured to bias the door (65) in a position in which the door (65) substantially covers the opening (60) of the discharge chute (40).

9. The lawn mower of claim 6, further comprising a supporting frame (45) for the grass receptacle (30), the supporting frame (45) including a projection (95) configured to contact a side of the door (65) when the grass receptacle (30) is engaged with the lawn mower (10).

10. The lawn mower of claim 9, further comprising a docking device (50) coupled to the housing (15) of the lawn mower (10), the docking device (50) having a recess (97) that corresponds with the projection (95) of the supporting frame (45).

11. The lawn mower of claim 9, wherein the supporting frame (45) includes a handle (85).

12. The lawn mower of claim 9, wherein the projection (95) is configured to push the door (65) to a position in which the opening (60) of the discharge chute (40) is substantially uncovered by the door (65).

13. The lawn mower of claim 6, wherein the door (65) is not visible when a grass receptacle (30) is engaged with the lawn mower (10).

## Patentansprüche

1. Abgabevorrichtung in einem Rasenmäher (10), umfassend eine Schneidevorrichtung, die unter einem Gehäuse (15) platziert ist, das die Seiten und das Oberteil der Schneidevorrichtung umgibt, ein Grasauslass im Gehäuse (15) führt geschnittenes Gras über eine Abgaberutsche (40) zu einem Beutel (30), in dem das Gras gesammelt wird, das Ende (60) der Abgaberutsche (40) ist mit einer Klappe (65) versehen, die die Abgaberutsche (40) schließt, wenn der Beutel (30) vom Rasenmäher (10) entfernt wird, **dadurch gekennzeichnet, dass** die Klappe (65) drehbar um eine Achse im Wesentlichen parallel zur axialen Richtung der Abgaberutsche (40) ist und automatisch so gedreht wird, dass das Ende (60) der Abgaberutsche (40) nicht abgedeckt wird, wenn der Beutel (30) am Rasenmäher (10) gesichert wird.

2. Abgabevorrichtung nach Anspruch 1, wobei das vordere Ende eines Beutelstützrahmens (45) an einer Ankoppelvorrichtung (50) am Rasenmäher (10) gesichert ist.

3. Abgabevorrichtung nach Anspruch 2, wobei die Klappe (65) durch Einbringen eines Vorsprungs (95) am Beutelstützrahmen (45) in eine Aussparung (97) in der Ankoppelvorrichtung (50) am Rasenmäher (10) gedreht wird.

4. Abgabevorrichtung nach Anspruch 3, wobei der Vorsprung (95) ausgestaltet ist, die Klappe (65) zu berühren und so zu drücken, dass die Klappe (65) vom Ende (60) der Abgaberutsche (40) weg gedreht wird.

5. Abgabevorrichtung nach Anspruch 1, wobei eine Feder (75) die Klappe (65) so vorspannt, dass sie das Ende (60) der Abgaberutsche (40) abdeckt, wenn der Beutel (30) vom Rasenmäher (10) entfernt wird.

6. Rasenmäher (10), umfassend:
ein Gehäuse (15);
eine Abgaberutsche (40), die an das Gehäuse (15) gekoppelt ist;
eine Klappe (65), die angepasst ist, eine Öffnung (60) der Abgaberutsche (40) selektiv abzudecken; und
ein Schwenkelement (70), das so an die Klappe (65) gekoppelt ist, dass die Klappe (65) drehbar um eine Achse ist, die sich in einer im Wesentlichen horizontalen Richtung erstreckt, **dadurch gekennzeichnet, dass** das Schwenkelement (70) eine Achse ist, die sich in einer Richtung erstreckt, die im Wesentlichen parallel zu einer axialen Richtung der Abgaberutsche (40) an der Öffnung (60) der Abgaberutsche (40) ist.

7. Rasenmäher nach Anspruch 6, überdies umfassend eine Ankoppelvorrichtung (50), die an die Abgaberutsche (40) gekoppelt ist, wobei sich das Schwenkelement (70) quer zu einer Wand (55) der Ankoppelvorrichtung (50) erstreckt, durch die sich die Öffnung (60) der Abgaberutsche (40) hindurch erstreckt.

8. Rasenmäher nach Anspruch 6, überdies umfassend ein Federelement (75), das ausgestaltet ist, die Klappe (65) in eine Position vorzuspannen, in der die Klappe (65) die Öffnung (60) der Abgaberutsche (40) im Wesentlichen abdeckt.

9. Rasenmäher nach Anspruch 6, überdies umfassend einen Stützrahmen (45) für den Grasaufnahmebehälter (30), wobei der Stützrahmen (45) einen Vorsprung (95) umfasst, der ausgestaltet ist, eine Seite der Klappe (65) zu berühren, wenn der Grasaufnahmebehälter (30) mit dem Rasenmäher (10) in Eingriff ist.

10. Rasenmäher nach Anspruch 9, überdies umfassend eine Ankoppelvorrichtung (50), die an das Gehäuse (15) des Rasenmähers (10) gekoppelt ist, wobei die Ankoppelvorrichtung (50) eine Aussparung (97) aufweist, die dem Vorsprung (95) des Stützrahmens (45) entspricht.

11. Rasenmäher nach Anspruch 9, wobei der Stützrahmen (45) einen Handgriff (85) umfasst.

12. Rasenmäher nach Anspruch 9, wobei der Vorsprung (95) ausgestaltet ist, die Klappe (65) in eine Position zu drücken, in der die Öffnung (60) der Abgaberutsche (40) im Wesentlichen von der Klappe (65) nicht bedeckt ist.

13. Rasenmäher nach Anspruch 6, wobei die Klappe (65) nicht sichtbar ist, wenn ein Grasaufnahmebehälter (30) mit dem Rasenmäher (10) in Eingriff ist.

## Revendications

1. Dispositif de décharge dans une tondeuse à gazon (10) comprenant un dispositif de coupe placé en-dessous d'un carter (15) qui entoure les côtés et le dessus du dispositif de coupe, une sortie d'herbe dans le carter (15) guide de l'herbe coupée par le biais d'une goulotte de décharge (40) dans un sac (30) où l'herbe est collectée, l'extrémité (60) de la goulotte de décharge (40) est pourvue d'une trappe (65) qui ferme la goulotte de décharge (40) lorsque le sac (30) est retiré de la tondeuse à gazon (10), **caractérisé en ce que** la trappe (65) peut être tournée autour d'un axe essentiellement parallèle à la direction axiale de la goulotte de décharge (40) et est tournée automatiquement pour ne pas couvrir l'extrémité (60) de la goulotte de décharge (40) lorsque le sac (30) est fixé sur la tondeuse à gazon (10).

2. Dispositif de décharge selon la revendication 1, dans lequel l'extrémité frontale d'un cadre de support de sac (45) est fixée sur un dispositif de couplage (50) sur la tondeuse à gazon (10).

3. Dispositif de décharge selon la revendication 2, dans lequel la trappe (65) est tournée en introduisant une saillie (95) sur le cadre de support de sac (45) dans un évidement (97) dans le dispositif de couplage (50) sur la tondeuse à gazon (10).

4. Dispositif de décharge selon la revendication 3, dans lequel la saillie (95) est configurée pour venir en contact avec et appuyer sur la trappe (65) de sorte que la trappe (65) est tournée hors de l'extrémité (60) de la goulotte de décharge (40).

5. Dispositif de décharge selon la revendication 1, dans lequel un ressort (75) précontraint la trappe (65) pour couvrir l'extrémité (60) de la goulotte de décharge (40) lorsque le sac (30) est retiré de la tondeuse à gazon (10).

6. Tondeuse à gazon (10) comprenant:
un carter (15) ;
une goulotte de décharge (40) couplée au carter (15) ;
une trappe (65) adaptée pour couvrir de manière sélective une ouverture (60) de la goulotte de décharge (40) ; et
un élément de pivot (70) couplé à la trappe (65) de sorte que la trappe (65) peut être tournée autour d'un axe qui s'étend dans une direction essentiellement horizontale, **caractérisée en ce que** l'élément de pivot (70) est un axe qui s'étend dans une direction qui est essentiellement parallèle à une direction axiale de la goulotte de décharge (40) à l'ouverture (60) de la goulotte de décharge (40).

7. Tondeuse à gazon selon la revendication 6, comprenant en outre un dispositif de couplage (50) couplé à la goulotte de décharge (40), dans laquelle l'élément de pivot (70) s'étend transversalement par rapport à une paroi (55) du dispositif de couplage (50) qui présente l'ouverture (60) de la goulotte de décharge (40) s'étendant en son travers.

8. Tondeuse à gazon selon la revendication 6, comprenant en outre un élément de ressort (75) configuré pour précontraindre la trappe (65) dans une position dans laquelle la trappe (65) couvre essentiellement l'ouverture (60) de la goulotte de décharge (40).

9. Tondeuse à gazon selon la revendication 6, comprenant en outre un cadre de support (45) pour le bac de récupération d'herbe (30), le cadre de support (45) comprenant une saillie (95) configurée pour venir en contact avec un côté de la trappe (65) lorsque le bac de récupération d'herbe (30) est en prise avec la tondeuse à gazon (10).

10. Tondeuse à gazon selon la revendication 9, comprenant en outre un dispositif de couplage (50) couplé au carter (15) de la tondeuse à gazon (10), le dispositif de couplage (50) présentant un évidement (97) qui correspond à la saillie (95) du cadre de support (45).

11. Tondeuse à gazon selon la revendication 9, dans laquelle le cadre de support (45) comprend une poignée (85).

12. Tondeuse à gazon selon la revendication 9, dans lequel la saillie (95) est configurée pour pousser la trappe (65) dans une position dans laquelle l'ouverture (60) de la goulotte de décharge (40) est essentiellement non couverte par la trappe (65).

13. Tondeuse à gazon selon la revendication 6, dans laquelle la trappe (65) n'est pas visible lorsqu'un bac de récupération d'herbe (30) est en prise avec la tondeuse à gazon (10).
